# FASCICULE DE BREVET EUROPEEN

(11) **EP 3 983 193 B1**
(45) Date de publication et mention de la délivrance du brevet: **07.06.2023**
(21) Numéro de dépôt: 20732207.4
(22) Date de dépôt: 10.06.2020
(51) Int. Cl.: B29C 45/03, B29C 45/18, B29C 45/53, B29C 45/17

(54) **MACHINE D'INJECTION DE MATIÈRE THERMOPLASTIQUE**
MASCHINE ZUR INJEKTION VON THERMOPLASTISCHEM MATERIAL
MACHINE FOR INJECTING THERMOPLASTIC MATERIAL

(30) Priorité: 13.06.2019 FR 1906294
(43) Date de publication de la demande: 20.04.2022
(73) Titulaire: Stoky, Aurélien, 54136 Bouxieres Aux Dames (FR)
(72) Inventeur: Stoky, Aurélien, 54136 Bouxieres Aux Dames (FR)
(74) Mandataire: Brungard, Yves Francois
(86) Numéro de dépôt international: PCT/EP2020/066138
(87) Numéro de publication internationale: WO 2020/249641

(56) Documents cités:
- GB-A- 350 810
- GB-A- 751 716
- GB-A- 871 827
- GB-A- 877 300
- US-A- 1 597 803
- US-A- 2 356 634
- US-A- 2 477 258
- US-A- 2 479 383
- US-A- 2 598 016
- US-B2- 7 494 332

## Description

### Domaine

L'invention concerne une machine d'injection de matière thermoplastique dans un moule, adaptée pour des pièces unitaires ou de petites séries, en particulier apte à être manoeuvrée manuellement.

### Technique antérieure

La technique industrielle d'injection de matière synthétique utilise classiquement des presses à injecter comportant un corps chauffant et une vis d'Achimède tournant dans le corps. La matière thermoplastique entre sous fore de granulés à une entrée et sort sous forme fondue et sous pression à l'autre extrémité de la vis. Cette technique est bien adaptée pour des pièces à fabriquer en continu et en série, mais ne convient pas pour des petites série. En effet, la presse contient un volume important de matière en transit, et pour chaque changement de production, ce volume se mélange avec la nouvelle matière. Il est nécessaire de purger cette matière avant de pouvoir commencer une nouvelle production. De plus, la mise en température initiale est longue et coûteuse en énergie.

Il a déjà été proposé des machines pour préparer et injecter de petits volumes manuellement. Le document GB 751,716 montre une machine comportant un bâti avec une colonne, une base supportant un moule, une console fixée sur la colonne, une chambre de fusion supportée par la console, un piston prévu pour plonger dans la chambre de fusion selon un axe d'injection par une ouverture supérieure et pour pousser la matière fondue contenue dans la chambre vers le moule. L'ouverture est entourée d'un entonnoir dans lequel une goulotte est apte à déverser des granulés de matière. Les granulés pénètrent alors dans la chambre de fusion à condition que le piston soit suffisamment relevé.

Le document US 7,494,332 B2 montre une machine similaire. Les documents GB 751 716 A et US 7 494 332 B2 divulguent le préambule de la revendication 1. D'autres machines d'injection sont connues de GB 877 300 A, GB 871 827 A et GB 350 810 A, qui divulguent également le préambule de la revendication 1.

Bien qu'ils permettent de réaliser des pièces unitaires ou de petite série, ces deux modèles présentent des inconvénients. En particulier, l'introduction de la matière en forme de granulés est faite à proximité de l'extrémité du piston qui peut être très chaude. La matière en granulés qui s'écoule vers la chambre de fusion peut s'y agglomérer et bloquer l'écoulement. Il est alors très délicat d'intervenir pour dégager l'ouverture, du fait des risques de brulure. Un autre inconvénient est que le piston doit être maintenu vers le haut lors du rechargement en matière. Ceci est fait par des ressorts. Mais lors de l'injection, ces ressorts continuent la compensation, ce qui diminue l'effort disponible pour générer la pression d'injection. Par ailleurs, la chambre de fusion reste ouverte pendant la phase de fusion de la matière, ce qui augmente les pertes thermiques et la durée d'obtention de la fusion complète.

### Exposé de l'invention

L'invention vise à fournir une machine d'injection pour de petites séries dont le rechargement en matière soit aisé et dont les pertes thermiques soient limitées.

Avec cet objectif en vue, l'invention concerne une machine d'injection de matière thermoplastique dans un moule, la machine comportant un bâti, une console montée sur le bâti, une chambre de fusion supportée par la console, un piston prévu pour plonger dans la chambre de fusion selon un axe d'injection par une ouverture supérieure et pousser la matière fondue contenue dans la chambre vers le moule, la machine étant caractérisée en ce qu'elle comporte une tête sur laquelle le piston est monté coulissant, la tête comportant en outre une trémie pour contenir de la matière thermoplastique non fondue, la tête étant mobile perpendiculairement à l'axe d'injection entre une position d'injection, dans laquelle le piston est aligné avec la chambre de fusion et la trémie est obturée par la console, et une position d'alimentation, dans laquelle la trémie est alignée avec la chambre de fusion pour l'alimenter en matière thermoplastique et le piston est limité en déplacement par la console.

Grâce à l'invention, le rechargement de la chambre de fusion est aisé. Il suffit de déplacer la tête vers la position d'alimentation pour aligner la trémie et la chambre, de telle sorte que la matière contenue dans la trémie tombe par gravité dans la chambre. De plus, dans cette position, le piston est limité en déplacement par la console, ce qui l'empêche de descendre. Il n'est pas nécessaire de prévoir de ressorts pour compenser son poids et dans la phase d'injection, toute la force d'appui sur le piston est disponible.

Selon une disposition constructive, la tête est montée pivotante autour d'un axe de colonne parallèle à l'axe d'injection entre les positions d'injection et d'alimentation. Le passage d'une position à l'autre est obtenu par le pivotement de la tête, ce qui est une manoeuvre facile à obtenir et une disposition aisée à fabriquer.

Selon une disposition constructive, la console comporte une plaque s'étendant perpendiculairement à l'axe d'injection de part et d'autre de celui-ci et en regard du piston et de la trémie pour obturer la trémie, la plaque comportant un trou débouchant en regard de la chambre de fusion. L'extrémité du piston vient en appui contre la plaque lorsque la tête est en position d'alimentation. Elle peut également frotter contre elle, ce qui permet de racler l'extrémité et d'enlever un reste de matière fondue, le cas échéant. La plaque sert également à obturer la trémie lorsque celle-ci n'est pas en regard de l'ouverture. On peut ainsi remplir la trémie lorsque la tête est en position d'injection.

Selon un perfectionnement, la chambre comporte une rondelle d'isolation thermique entre la chambre et la plaque. On limite ainsi les pertes thermiques de la chambre de fusion et l'élévation de température de la plaque.

Selon un perfectionnement, la tête comporte une semelle s'étendant entre le piston et la trémie et affleurant la console pour obturer la chambre de fusion dans une position intermédiaire de la tête entre la position d'injection et la position d'alimentation. Ainsi, on dispose d'une position de la tête dans laquelle la chambre est obturée, le piston est maintenu hors de la chambre et repose sur la console, et la trémie est obturée. Cette position est particulièrement utile pendant la phase de fusion pour limiter les pertes thermiques et accélérer la phase de fusion.

Selon une disposition constructive, le piston est manoeuvré par un bras monté sur la tête. Le piston est ainsi actionnable manuellement, ce qui est de réalisation simple. Le bras sert aussi à commander le déplacement de la tête.

Selon une disposition constructive, le bâti comporte une colonne ayant un axe parallèle à l'axe d'injection, la console étant montée coulissante sur la colonne et comportant des moyens d'arrêt pour fixer la console en position sur la colonne. On peut ainsi ajuster la position de la chambre de fusion en fonction de la taille du moule et de sa position.

Selon un perfectionnement, la tête comporte des moyens de verrouillage pour fixer la tête en position d'injection.

Selon une disposition constructive, les moyens de verrouillage sont formés par un boulon traversant la tête et la console, l'un des éléments parmi la tête et la console comportant une lumière traversée par le boulon pour permettre le mouvement entre la position d'injection et la position d'alimentation, le boulon étant apte à être serré pour lier la tête et la console.

Selon un perfectionnement, la machine comporte des moyens de butée pour arrêter le pivotement de la tête en position d'injection et en position d'alimentation. Les positions sont ainsi parfaitement reproductibles et faciles à trouver.

Selon une disposition particulière, la chambre de fusion comporte une buse d'injection destinée à venir en contact avec le moule par une translation de la chambre vers le moule par rapport à la console. La buse permet d'assurer une communication étanche entre la chambre et la cavité du moule pour remplir la cavité de matière fondue.

Selon une disposition constructive, la machine comporte des moyens de rappel qui tendent à maintenir l'ouverture de la chambre de fusion au plus près de la console, pour permettre à la buse de venir en contact contre le moule lors de la mise en pression par le piston. Au repos, la chambre de fusion est poussée contre la plaque par les moyens de rappel. Lors de l'injection, lorsque la pression à l'encontre du piston est suffisante, la chambre se déplace en totalité pour venir mettre en appui la buse contre le moule. Au relâchement de la pression, les moyens de rappel ramènent la chambre en appui contre la plaque.

### Brève description des figures

L'invention sera mieux comprise et d'autres particularités et avantages apparaîtront à la lecture de la description qui va suivre, la description faisant référence aux dessins annexés parmi lesquels :
[Fig.1] : la figure 1 est une vue en perspective d'une machine conforme à un mode de réalisation l'invention en position d'alimentation ;
[Fig.2] : la figure 2 est une vue similaire à la figure 1 avec la tête en position intermédiaire ;
[Fig.3] : la figure 3 est une vue similaire à la figure 1 avec la tête en position d'injection ;
[Fig.4] : la figure 4 est une vue similaire à la figure 1 avec la tête en position d'injection et le piston abaissé en fin d'injection ;
[Fig.5] : la figure 5 est une vue en coupe selon l'axe d'injection de la machine avec la tête en position d'alimentation ;
[Fig.6] : la figure 6 est une vue en coupe selon l'axe d'injection de la machine dans la position de la figure 4.

### Description détaillée

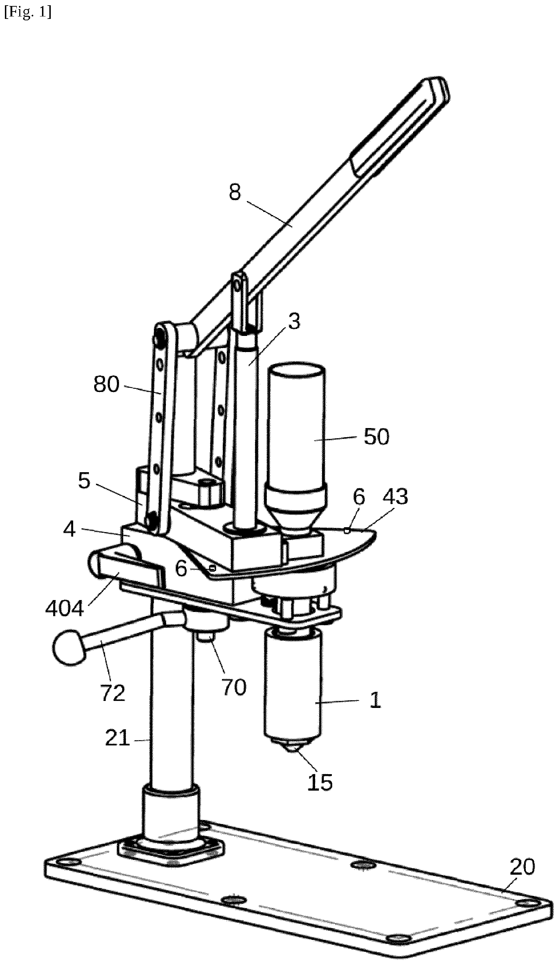

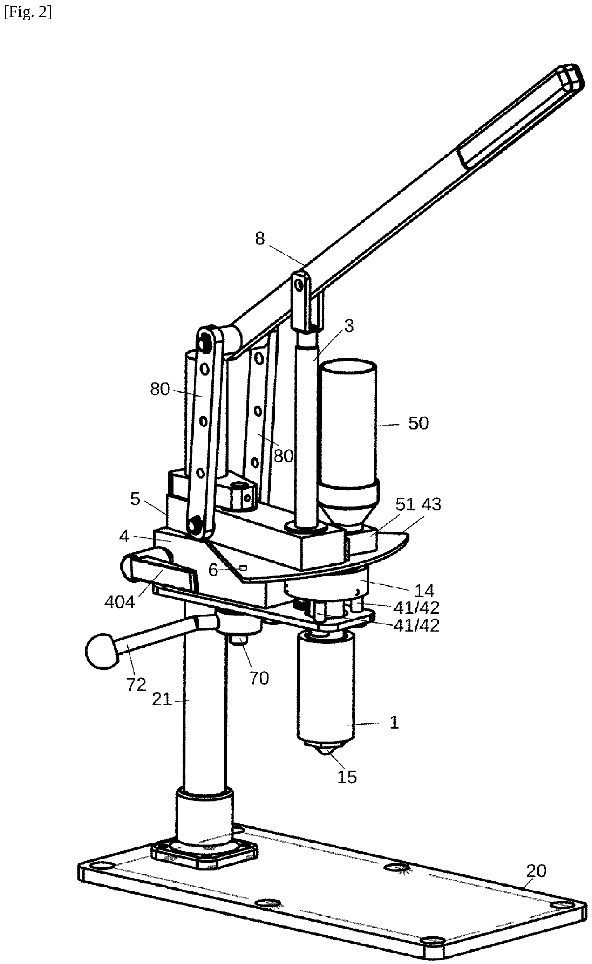

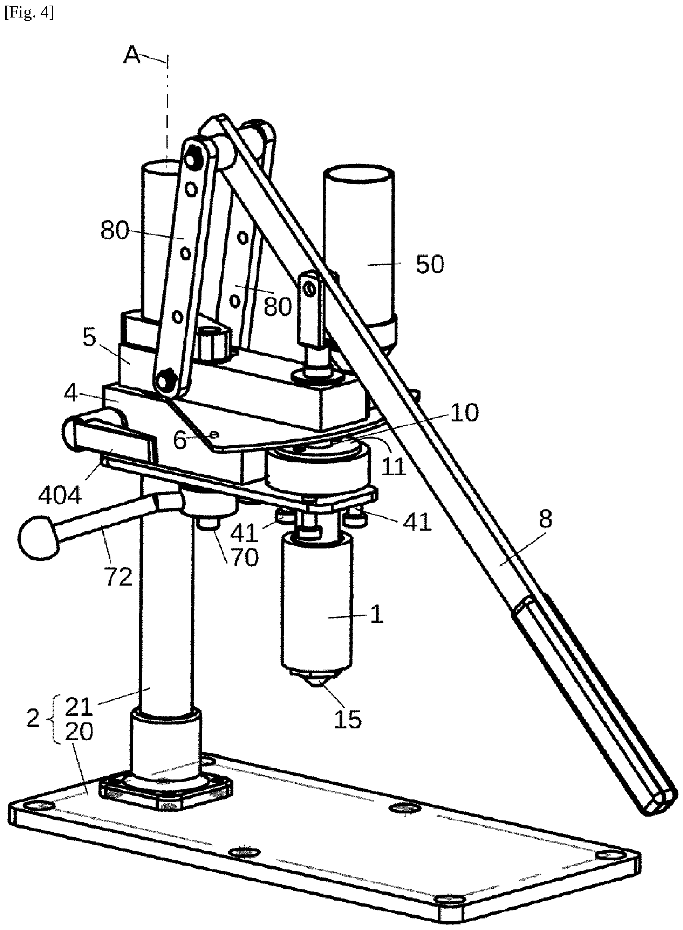

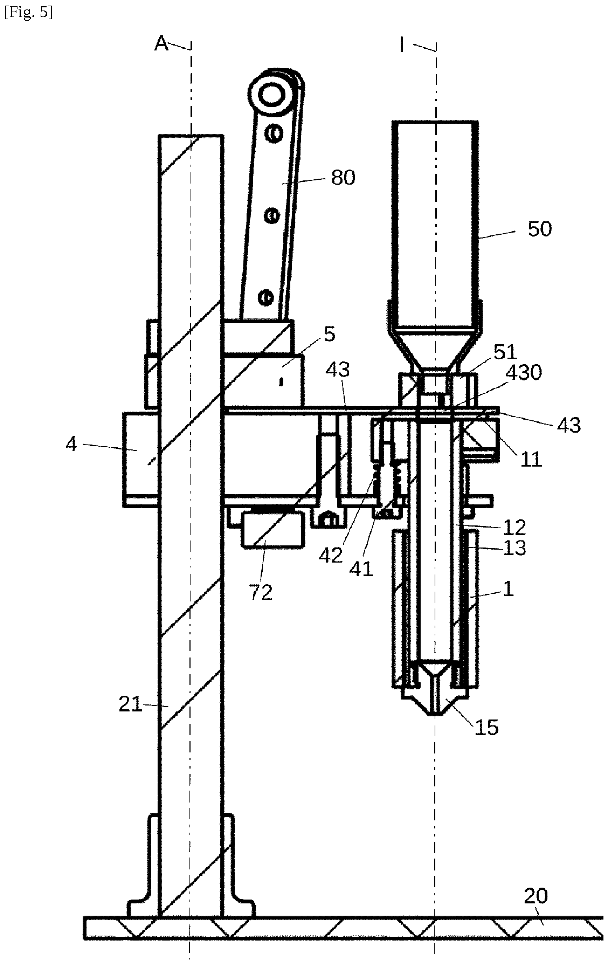

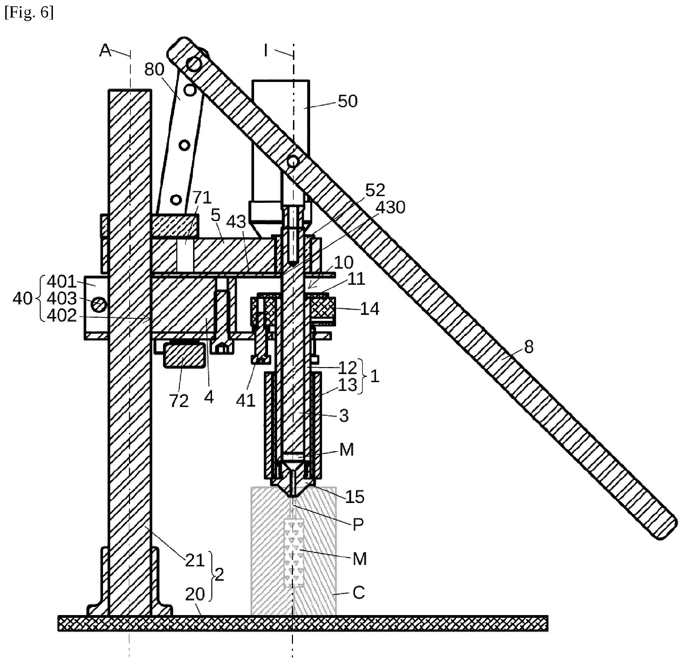

Une machine d'injection de matière thermoplastique conforme à un mode de réalisation de l'invention est montrée sur les figures 1 à 6. La machine est prévue pour injecter la matière M fondue dans un moule C, comme représenté sur la figure 6. La matière M est alimentée sous forme de particules solides, par exemple en granulés, par l'intermédiaire d'une trémie 50 dans une chambre de fusion 1 où elle est fondue avant d'être injectée dans le moule C par un piston 3.

La machine comporte un bâti 2 comportant une base 20 ayant sensiblement une forme plane destinée à être placée à l'horizontale et une colonne 21 faisant saillie de la base 20 selon un axe de colonne A.

Une console 4 est montée coulissante sur la colonne 21 en s'étendant parallèlement à la base 20 et comporte des moyens d'arrêt 40 pour fixer la console 4 en position sur la colonne 21. Les moyens d'arrêt 40 comportent une fente 401 s'étendant radialement par rapport à un alésage 402 de la console 4 qui forme le guidage de la console 4 sur la colonne 21, et un boulon 403 s'étendant perpendiculairement à la fente, le boulon 403 étant apte à resserrer l'alésage 402 pour serrer la console 4 sur la colonne 21. Un écrou du boulon 403 comporte un levier 404 pour être manoeuvré à la main.

La chambre de fusion 1 s'étend verticalement selon un axe d'injection I axe parallèle à l'axe de colonne A et est supportée par la console 4 par l'intermédiaire de trois colonnettes 41 qui guident la chambre de fusion 1 dans un mouvement de translation selon l'axe d'injection I. Les colonnettes sont fixées sur une couronne 14 fixée dans la partie supérieure de la chambre de fusion 1 au niveau de l'ouverture 10. Des moyens de rappel sous la forme de ressorts 42 placés autour des colonnettes 41 tendent à maintenir une ouverture 10 de la chambre de fusion 1 au plus près d'une plaque 43 de la console 4, dans une direction opposée à la base 20. La plaque 43 s'étend perpendiculairement à l'axe d'injection I en partie supérieure de la console 4, c'est-à-dire à l'opposé de la base 20, et comporte un trou débouchant 430 en regard de l'ouverture 10.

La chambre de fusion 1 comporte une rondelle 11 d'isolation thermique entre la chambre de fusion 1 et la plaque 43, la rondelle 11 étant plaquée contre la plaque 43 par les ressorts 42. La chambre de fusion 1 est constituée d'une chemise 12 de forme tubulaire dont le diamètre intérieur est ajusté au diamètre extérieur du piston 3, et d'un élément chauffant 13 entourant la chemise 12. La machine comporte une régulation électrique, non représentée, pour alimenter en courant l'élément chauffant 13 et réguler la température à l'intérieur de la chambre de fusion 1 à l'aide d'au moins une sonde de température, non représentée. La chemise 12 est fixée sur la couronne 14.

La machine comporte en outre une tête 5 sur laquelle un piston 3 prévu pour plonger dans la chambre de fusion 1 selon un axe d'injection I par l'ouverture 10 supérieure est monté coulissant, guidé par une bague 52. La tête 5 est montée pivotante sur la colonne 21 autour de l'axe de colonne A entre une position d'injection et une position d'alimentation. Des moyens de butée 6 sont prévus pour arrêter le pivotement de la tête 5 en position d'injection et en position d'alimentation. Les moyens de butée sont par exemple deux taquets 6 fixés sur la plaque 43.

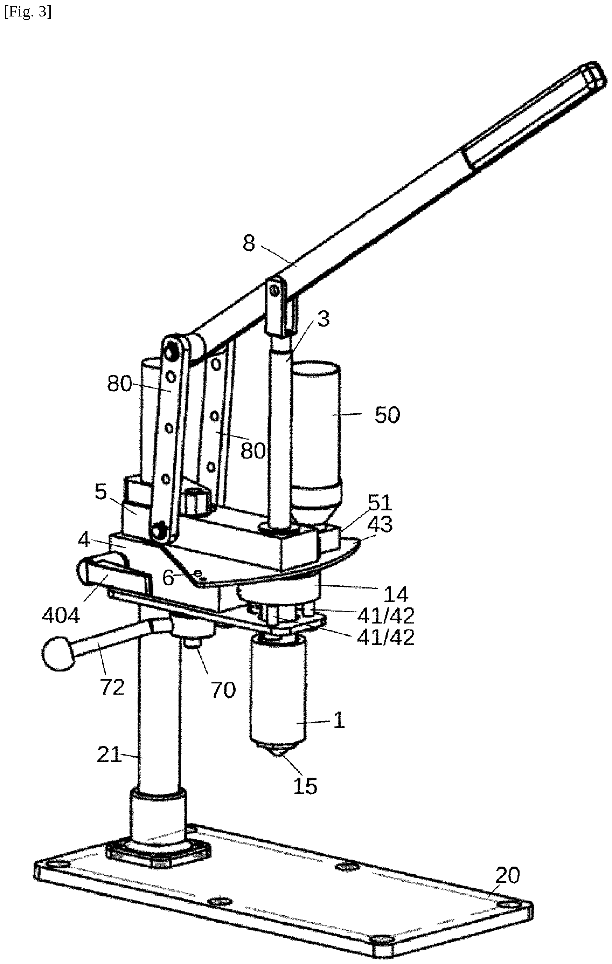

La tête 5 comporte en outre une trémie 50 pour contenir de la matière thermoplastique non fondue. La trémie 50 a une forme générale d'entonnoir, mais pourrait avoir des formes variées. La tête 5 comporte une semelle 51 s'étendant entre le piston 3 et la trémie 50 et affleurant la plaque 43 de la console 4. Dans la position d'alimentation, comme montré sur la figure 1, la trémie 50 est alignée avec la chambre de fusion 1 pour l'alimenter en matière thermoplastique et le piston 3 est limité en déplacement par la console 4, à savoir par la plaque 43 de la console 4. Dans la position d'injection, comme montré sur la figure 3, le piston 3 est aligné avec la chambre de fusion 1 et la trémie 50 est obturée par la console 4. Dans une position de la tête 5 intermédiaire entre la position d'injection et la position d'alimentation, la semelle 51 est en regard du trou de la plaque 43 de la console 4 et obture la chambre de fusion 1.

La tête 5 comporte des moyens de verrouillage 7 pour fixer celle-ci en position d'injection. Les moyens de verrouillage 7 sont formés par un boulon 70 traversant la tête 5 et la console 4 apte à être serré pour lier la tête 5 et la console 4 ensembles. La tête 5 comporte une lumière 71 traversée par le boulon 70 pour permettre le mouvement de la tête 5 entre la position d'injection et la position d'alimentation. L'écrou du boulon 70 comporte également un levier 72 pour être manoeuvré à la main.

Un bras 8 est relié au piston 3 de manière pivotante autour d'un axe perpendiculaire à l'axe d'injection I et à la tête 5 par l'intermédiaire de deux biellettes 80 parallèles entre elles. Ainsi le bras 8 permet de commander manuellement le coulissement du piston 3 dans la bague 52 de guidage et dans la chambre de fusion 1.

La chambre de fusion 1 comporte une buse 15 d'injection destinée à venir en contact avec le moule C par la translation de la chambre vers le moule C sur les colonnettes 41. La buse 15 comporte des moyens d'obturation, non représentés, pour fermer la chambre de fusion 1 en dehors des phases d'injection. Les moyens d'obturation peuvent être commandés par divers moyens, par exemple par l'appui de la buse 15 sur le moule C, ou par la mise en pression de la matière dans la chambre de fusion 1.

On va décrire un exemple de cycle de fonctionnement de la machine.

On considère que la position initiale de la tête 5 est la position intermédiaire. Dans cette position, la trémie 50 est obturée par la plaque 43 et peut recevoir de la matière thermoplastique sous une forme de solides fragmentés, par exemple en granulés. Le piston 3 repose par gravité sur la plaque 43. Le moule C est en place sur la base 20 sous la chambre de fusion 1, avec un trou d'injection P en regard de la buse 15. Les moyens d'arrêt 40 sont serrés après l'ajustage en hauteur de la console 4 sur la colonne 21.

On commande la régulation pour mettre en chauffe la chambre de fusion 1 à une température de consigne qui est fonction de la matière à injecter. La couronne 14 sert de diffuseur thermique qui limite la progression de la température vers le haut. Dans le même temps, on fait pivoter la tête 5 avec le bras 8 vers la position d'alimentation. La chambre de fusion 1 se remplit alors de la matière fragmentée fournie par la trémie 50 en passant par le trou 430 et l'ouverture 10. Lorsque la chambre est pleine, on repousse la tête 5 vers la position intermédiaire et on attend que la matière soit fondue.

Lorsque la matière est fondue, on pivote la tête 5 vers la position d'injection, on serre les moyens de verrouillage 7 pour garantir la position d'injection et rigidifier la console 4. On abaisse le piston 3 à l'aide du bras 8, ce qui compacte la matière M fondue dans la chambre de fusion 1. En mettant la matière en pression avec le piston 3, on pousse la chambre de fusion 1 à l'encontre des ressorts 42 de manière à ce qu'elle se translate en direction de la base 20. La buse 15 vient alors en butée contre le moule C et s'ouvre pour laisser passer la matière M sous pression à l'intérieur du moule C. Le piston 3 coulisse dans la chambre de fusion 1 pour repousser la matière jusqu'à ce que le moule C soit rempli.

On relève alors le bras 8, de telle sorte que la buse 15 se ferme, la chambre de fusion 1 remonte en butée contre la plaque 43 et le piston 3 sort de la chambre de fusion 1. On desserre les moyens de verrouillage 7 et on fait pivoter la tête 5 vers la position intermédiaire. Lors de ce dernier mouvement, on peut laisser l'extrémité du piston 3 en frottement contre la plaque 43 de manière à racler un résidu de matière sur le piston 3. La machine est prête pour un nouveau cycle. Si la trémie 50 contient suffisamment de matière, on peut passer directement à la position d'alimentation sans s'arrêter dans la position intermédiaire.

L'invention n'est pas limitée au mode de réalisation qui a été décrit uniquement à titre d'exemple. Le bras 8 pourrait être pivotant sur la tête 5 et transmettre son mouvement par l'intermédiaire d'une biellette ou d'un pignon engrenant avec une crémaillère. Le piston 3 pourrait être manoeuvré par un actionneur électrique, hydraulique ou pneumatique. Les moyens d'arrêt pourraient être remplacés par un système de réglage à vis.

## Revendications

1. Machine d'injection de matière thermoplastique dans un moule (C), la machine comportant un bâti (2), une console (4) montée sur le bâti, une chambre de fusion (1) supportée par la console (4), un piston (3) prévu pour plonger dans la chambre de fusion (1) selon un axe d'injection (I) par une ouverture (10) supérieure et pousser la matière (M) fondue contenue dans la chambre vers le moule (C), la machine étant **caractérisée en ce qu'**elle comporte une tête (5) sur laquelle le piston (3) est monté coulissant, la tête (5) comportant en outre une trémie (50) pour contenir de la matière thermoplastique non fondue, la tête (5) étant mobile perpendiculairement à l'axe d'injection (I) entre une position d'injection, dans laquelle le piston (3) est aligné avec la chambre de fusion (1) et la trémie (50) est obturée par la console (4), et une position d'alimentation, dans laquelle la trémie (50) est alignée avec la chambre de fusion (1) pour l'alimenter en matière thermoplastique et le piston (3) est limité en déplacement par la console (4).

2. Machine selon la revendication 1, dans laquelle la tête (5) est montée pivotante autour d'un axe de colonne (A) parallèle à l'axe d'injection (I) entre les positions d'injection et d'alimentation.

3. Machine selon l'une des revendications précédentes, dans laquelle la console (4) comporte une plaque (43) s'étendant perpendiculairement à l'axe d'injection (I) de part et d'autre de celui-ci et en regard du piston (3) et de la trémie (50) pour obturer la trémie (50), la plaque (43) comportant un trou débouchant (430) en regard de la chambre de fusion (1).

4. Machine selon la revendication 3, dans laquelle la chambre comporte une rondelle (11) d'isolation thermique entre la chambre de fusion (1) et la plaque (43).

5. Machine selon l'une des revendications précédentes, dans laquelle la tête (5) comporte une semelle (51) s'étendant entre le piston (3) et la trémie (50) et affleurant la console (4) pour obturer la chambre de fusion (1) dans une position intermédiaire de la tête (5) entre la position d'injection et la position d'alimentation.

6. Machine selon l'une des revendications précédentes, dans laquelle le piston (3) est manoeuvré par un bras (8) monté sur la tête (5).

7. Machine selon l'une des revendications précédentes, dans laquelle le bâti (2) comporte une colonne (21) ayant un axe parallèle à l'axe d'injection (I), la console (4) étant montée coulissante sur la colonne (21) et comportant des moyens d'arrêt (40) pour fixer la console (4) en position sur la colonne (21).

8. Machine selon l'une des revendications précédentes, dans laquelle la tête (5) comporte des moyens de verrouillage (7) pour fixer la tête (5) en position d'injection.

9. Machine selon la revendication 8, dans laquelle les moyens de verrouillage sont formés par un boulon (7) traversant la tête (5) et la console (4), l'un des éléments parmi la tête (5) et la console (4) comportant une lumière (71) traversée par le boulon (7) pour permettre le mouvement entre la position d'injection et la position d'alimentation, le boulon (7) étant apte à être serré pour lier la tête (5) et la console (4).

10. Machine selon l'une des revendications précédentes, **caractérisée en ce qu'**elle comporte des moyens de butée (6) pour arrêter le pivotement de la tête (5) en position d'injection et en position d'alimentation.

11. Machine selon l'une des revendications précédentes, dans laquelle la chambre de fusion (1) comporte une buse (15) d'injection destinée à venir en contact avec le moule (C) par une translation de la chambre de fusion (1) vers le moule (C) par rapport à la console (4).

12. Machine selon la revendication 11, dans laquelle des moyens de rappel (42) tendent à maintenir l'ouverture (10) de la chambre de fusion (1) au plus près de la console (4), pour permettre à la buse (15) de venir en contact contre le moule (C) lors de la mise en pression par le piston (3).

## Patentansprüche

1. Maschine zum Einspritzen von Thermoplasten in eine Form (C), bestehend aus einem Gestell (2), einem auf diesem Gestell montierten Träger (4), einer von diesem Träger (4) getragenen Schmelzkammer (1), einem Kolben (3), der dafür vorgesehen ist, in diese Schmelzkammer (1) entlang einer Einspritzachse (I) durch eine Öffnung (10) an der Oberseite einzutauchen und die in der Kammer enthaltene geschmolzene Masse (M) in die Form (C) zu pressen, wobei die Maschine **dadurch gekennzeichnet ist, dass** diese einen Kopf (5) aufweist, auf dem der Kolben (3) gleitend gelagert ist, der Kopf (5) des Weiteren einen Vorratsbehälter (50) zur Aufnahme des ungeschmolzenen Thermoplasten aufweist, der Kopf (5) senkrecht zur Einspritzachse (I) beweglich ist zwischen einerseits einer Einspritzposition, in der der Kolben (3) zur Schmelzkammer (1) ausgerichtet und der Vorratsbehälter (50) vom Träger (4) verschlossen ist, und anderseits einer Zuführposition, in der der Vorratsbehälter (50) zur Schmelzkammer (1) zu deren Versorgung mit dem Thermoplasten ausgerichtet ist und der Bewegungsbereich des Kolbens (3) durch den Träger (4) beschränkt wird.

2. Maschine gemäß Anspruch 1, in der der Kopf (5) schwenkbar um eine Ständerachse (A) parallel zur Einspritzachse (I) zwischen Einspritz- und Zuführposition montiert ist.

3. Maschine gemäß einem der vorstehenden Ansprüche, in der der Träger (4) eine Platte (43) aufweist, die sich senkrecht zur Einspritzachse (I) beiderseits dieser und gegenüber dem Kolben (3) und dem Vorratsbehälter (50) zum Verschließen des Letzteren erstreckt, wobei diese Platte (43) eine Durchtrittsöffnung (430) gegenüber der Schmelzkammer (1) aufweist.

4. Maschine gemäß Anspruch 3, in der die Kammer zwischen der Schmelzkammer (1) und der Platte (43) eine wärmeisolierende Scheibe (11) aufweist.

5. Maschine gemäß einem der vorstehenden Ansprüche, in der der Kopf (5) eine Sohlplatte (51) aufweist, die sich zwischen dem Kolben (3) und dem Vorratsbehälter (50) erstreckt und bündig am Träger (4) anliegt, um die Schmelzkammer (1) zu verschließen, wenn sich der Kopf (5) zwischen Einspritz- und Zuführposition befindet.

6. Maschine gemäß einem der vorstehenden Ansprüche, in der der Kolben (3) von einem auf dem Kopf (5) montierten Arm (8) betätigt wird.

7. Maschine gemäß einem der vorstehenden Ansprüche, in der das Gestell (2) einen Säulenständer (21) mit einer zur Einspritzachse (I) parallel verlaufenden Achse aufweist, wobei der Träger (4) gleitend auf dem Säulenständer (21) befestigt ist und Arretiervorrichtungen (40) zum Fixieren des Trägers (4) auf dem Säulenständer (21) aufweist.

8. Maschine gemäß einem der vorstehenden Ansprüche, in der der Kopf (5) Sperrvorrichtungen (7) zum Fixieren des Kopfes (5) in der Einspritzposition aufweist.

9. Maschine gemäß Anspruch 8, in der die Sperrvorrichtungen von einem Bolzen (7) gebildet werden, der durch den Kopf (5) und den Träger (4) geführt ist, wobei eines der Elemente zwischen dem Kopf (5) und der Träger (4) ein Licht (71) aufweist, durch das der Bolzen (7) verläuft, um die Bewegung zwischen der Einspritz- und der Zuführposition zu ermöglichen, und der Bolzen (7) sich festziehen lässt, um Kopf (5) und Träger (4) miteinander zu verbinden.

10. Maschine gemäß einem der vorstehenden Ansprüche, die **dadurch gekennzeichnet ist, dass** sie eine Anschlagvorrichtung (6) zur Begrenzung der Schwenkbewegung des Kopfes (5) auf Einspritz- und Zuführposition aufweist.

11. Maschine gemäß einem der vorstehenden Ansprüche, in der die Schmelzkammer (1) eine Einspritzdüse (15) birgt, die so konzipiert ist, dass sie mittels einer Translationsbewegung der Schmelzkammer (1) hin zur Form (C) gegenüber dem Träger (4) mit der Form (C) in Kontakt kommt.

12. Maschine gemäß Anspruch 11, in der Rückstellvorrichtungen (42) die Öffnung (10) der Schmelzkammer (1) möglichst nahe am Träger (4) bewahren, damit die Düse (15) beim Ausüben von Druck mit dem Kolben (3) mit der Form (C) in Berührung kommen kann.

## Claims

1. Machine for injecting thermoplastic material into a mould (C), the machine comprising a frame (2), a bracket (4) mounted on the frame, a melt chamber (1) supported by bracket (4), piston (3) designed to plunge into melt chamber (1) along an injection axis (I) through an upper opening (10) and push molten material (M) contained in the chamber into mould (C), the machine being **characterised by** the fact it includes a head (5) along which piston (3) slides, head (5) also has a hopper (50) that contains the non-molten thermoplastic material, head (5) being mobile perpendicularly to injection axis (I) between an injection position, in which piston (3) is aligned with melt chamber (1) and hopper (50) is blocked off by bracket (4), and a feed position in which hopper (50) is aligned with melt chamber (1) to feed it with thermoplastic material and the movement of piston (3) is limited by bracket (4).

2. Machine as per claim (1) in which head (5) can swivel around column axis (A) parallel to injection axis (I) between the injection and feed positions.

3. Machine as per one of the previous claims, in which bracket (4) includes a plate (43) extending perpendicularly to injection axis (I) on either side of it and opposite piston (3) and hopper (50) to block off hopper (50), plate (43) including through hole (430) opposite melt chamber (1).

4. Machine as per claim 3, in which the chamber includes heat insulation washer (11) between melt chamber (1) and plate (43).

5. Machine as per one of the previous claims in which head (5) has base plate (51) extending between piston (3) and hopper (50), flush with bracket (4) to block off melt chamber (1) where head (5) is in an intermediate position between the injection position and the feed position.

6. Machine as per one of the previous claims in which piston (3) is operated by arm (8) mounted on head (5).

7. Machine as per one of the previous claims in which frame (2) includes column (21) that has an axis parallel to injection axis (I), bracket (4) being mounted in such a way it can slide along column (21) and comprising stopping system (40) for holding bracket (4) in position on column (21).

8. Machine as per one of the previous claims in which head (5) includes locking system (7) to fasten head (5) in the injection position.

9. Machine as per claim 8 in which the locking system is formed by bolt (7) passing through head (5) and bracket (4), one of the elements of head (5) and of bracket (4) comprising a hole (71) through which bolt (7) passes to enable the movement between the injection position and the feed position, bolt (7) being capable of being tightened to link head (5) and bracket (4).

10. Machine as per one of the previous claims, **characterised by** the fact it includes end-stops (6) to stop the swivelling of head (5) in the injection position and in the feed position.

11. Machine as per one of the previous claims in which melt chamber (1) has injection nozzle (15) designed to come into contact with mould (C) by a movement of melt chamber (1) towards mould (C) with respect to bracket (4).

12. Machine as per claim 11 in which return system (42) tends to keep opening (10) of melt chamber (1) as close as possible to bracket (4), to enable nozzle (15) to come into contact against mould (C) when piston (3) raises the pressure.
